# EUROPEAN PATENT SPECIFICATION

(11) **EP 2 152 815 B1**
(45) Date of publication and mention of the grant of the patent: **18.08.2010**
(21) Application number: 08719267.0
(22) Date of filing: 27.02.2008
(51) Int. Cl.: C09D 5/28, C09D 161/28, C09D 167/00

(54) **RESIN COMPOSITIONS FOR WRINKLE-PATTERN PAINT PURPOSES**
HARZZUSAMMENSETZUNGEN FÜR RUNZELIG STRUKTURIERTE LACKIERUNGEN
COMPOSITIONS DE RÉSINE POUR PEINTURE À FINI PLISSÉ

(30) Priority: 28.05.2007 JP 2007141169
(43) Date of publication of application: 17.02.2010
(73) Proprietor: BASF Coatings Japan Ltd., Totsuka-ku Yokohama 244-0815 (JP)
(72) Inventor: KOHASHI, Taichiro, 245-0016 Yokohama (JP); MIZUTANI, Hiroki, 231-0801 Yokohama (JP); TAKEUCHI, Yoshitomo, 244-0817 Yokohama (JP); NAKANISHI, Futoshi, Ako-shi 678-0247 Hyogo (JP)
(74) Representative: Fischer, Jens-Dieter W.E.
(86) International application number: PCT/IB2008/000559
(87) International publication number: WO 2008/146103

(56) References cited:
- US-A1- 2003 049 369
- DATABASE WPI Week 199850 Thomson Scientific, London, GB; AN 1998-589913 XP002483495 & JP 10 265732 A (NIPPON PAINT CO LTD) 6 October 1998 (1998-10-06)
- DATABASE WPI Week 199312 Thomson Scientific, London, GB; AN 1993-096893 XP002483496 & JP 05 039443 A (KANSAI PAINT CO LTD) 19 February 1993 (1993-02-19)

## Description

### Specification

### [Technical Field]

The invention concerns resin compositions which are used in paints with which paint films which have a wrinkle pattern can be formed.

### [Technical Background]

Paints which contain (A) from 60 to 95 parts by weight of polyester resin which has hydroxyl groups, (B) from 5 to 40 parts by weight of methylated melamine resin and (C) from 0.2 to 3 parts by weight of sulfonic acid blocked with tertiary amine of boiling point from 80 to 150°C and which contain pigment, as required, are known as paints with which paint films which have a wrinkle pattern can be obtained (see Patent Citation 1). However, in this case there is a problem in that a stable wrinkle pattern cannot be obtained in the paint films.

Furthermore, paints which are characterized by containing per 100 parts by weight in total of (A) from 60 to 95 parts by weight of hydroxyl group containing paint film forming base resin and (B) from 5 to 40 parts by weight of low skeleton-methylated melamine resin, (C) from 0.1 to 3 parts by weight as the amount of sulfonic acid of a reaction mixture of one equivalent of sulfonic acid and from 1.5 to 30 equivalents of a secondary or tertiary amine of boiling point from 30 to 250°C and (D) from 0.2 to 10 parts by weight of organopolysiloxane which has at least two (blocked) isocyanate groups per molecule at the ends of the molecule are known as paints with which paint films which have a fine wrinkle pattern finish can be obtained (see Patent Citation 2). However, in this case the wrinkle pattern finish lacks aging stability and furthermore the paint is also unsatisfactory in that a stable wrinkle pattern finish cannot be obtained in respect of even slight changes in the painting conditions and, moreover, there is a problem in that the staining resistance is unsatisfactory when the paint is used outdoors.

Furthermore, a paint which is **characterized in that** it contains per 100 parts by weight in total of (A) from 65 to 95 parts by weight of polyester resin of hydroxyl group value from 5 to 110 and (B) from 5 to 35 parts by weight of low nuclear methylated melamine resin, (C) from 0.1 to 3 parts by weight as sulphonic acid of a reaction mixture of 1 mol of sulfonic acid and at least 7.2 mol of secondary amine, (D) from 1 to 15 parts by weight of silica powder of average particle diameter not more than 10 µm and (E) from 1 to 30 parts by weight of one or more selected from among organic resin particles and inorganic glass particles of average particle diameter from 2 to 70 µm and organic resin fibers and inorganic fibers of average diameter from 2 to 50 µm is known as a paint which has good corrosion resistance and with which a wrinkle pattern finish which has excellent design features and pattern stability can be formed. However, in this case the mol ratio of secondary amine is an excess with respect to the sulfonic acid and so there is a weakness in that when combined with the organosilicate based agent for providing a hydrophilic nature the hydrophilic performance declines in a short period of time.

Furthermore, a thermosetting resin composition which contains (A) a film-forming polyol resin which has a hydroxyl value of from 5 to 300 mgKOH/g and a number average molecular weight of from 500 to 20,000, (B) a hardening agent which can react with the abovementioned film-forming polyol resin, (C) an organosilica sol of particle diameter from 10 to 100 nm and a hydrophobicity represented by the hexane tolerance value of at least 15.0 ml and (D) at least one partially hydrolyzed condensate of an alkoxysilane compound is known as a thermosetting resin composition with which hardened materials which have excellent staining resistance outdoors can be obtained (see Patent Citation 4). However, in this case there is a weakness in that even though a lower nuclear melamine resin is used for the hardening agent and an acid catalyst which has been blocked with amine in an amount equimolar with the aromatic sulfonic acid is used, the wrinkle pattern finish of the hardened material is not stable.

Patent Citation 1:
   Japanese examined patent publication H6-11879
Patent Citation 2:
   Japanese unexamined patent application laid open H5-320578
Patent Citation 3:
   Japanese unexamined patent application laid open H5-039443
Patent Citation 4:
   Japanese unexamined patent application laid open H11-124501

### [Disclosure of the Invention]

### [Problems to be Resolved by the Invention]

The present invention is intended to provide resin compositions which can be used in wrinkle pattern paints with which paint films of which the wrinkled pattern finish of the paint film has excellent aging stability and which, moreover, have excellent staining resistance even when used outdoors can be formed.

### [Means of Resolving These Problems]

As a result of a thorough investigation carried out with a view to resolving the abovementioned problems, the inventors have discovered that by setting the mol ratio of the sulfonic acid and the tertiary amine compound used for blocking the sulfonic acid within specified range and incorporating specified particle-like or fiber-like aggregate, the wrinkle pattern finish of the paint film is stable with the passage of time and, in addition, they have discovered that even when a specified organosilicate, condensate thereof or partial hydrolyzate of said condensate is incorporated the stability of the wrinkle pattern finish is not lost and the staining resistance is improved, and the invention is based upon these discoveries.

That is to say, the present invention provides a resin composition which contains (A) hydroxyl group containing polyester resin of which the hydroxyl group value is from 5 to 200 mgKOH/g and the number average molecular weight is from 500 to 20,000, (B) hexakis-alkoxymethylated melamine resin, (C) de-watering agent, (D) blocked sulfonic acid compound which has been blocked with a tertiary amine compound of boiling point from 50 to 300°C where the mol ratio with respect to the sulfonic acid is from 0.2 to 0.9, (E) silicate compound and (F) at least one material selected from among (a) organic resin particles of average particle diameter not more than 40 µm, (b) inorganic glass particles of average particle diameter not more than 100 µm and (c) inorganic fibers of average length not more than 300 µm which is **characterized in that** the mass ratio of the (A) component and the (B) component as the solid fractions is from 60/40 to 90/10 and, per 100 parts by mass of the total solid fraction of the (A) component and the (B) component, the amount of the (C) component included as solid fraction is from 0.1 to 10 parts by mass, the amount of the (D) component included as solid fraction is from 0.1 to 5 parts by mass, the amount of the (E) component included as solid fraction is from 0.5 to 10 parts by mass and the amount of the (F) component included as solid fraction is from 1 to 30 parts by mass.

Furthermore, the present invention provides a resin composition in which, in the abovementioned resin composition, the silicate compound of the (E) component is an organosilicate which can be represented by the general formula (1) which is indicated below, an organosilicate which can be represented by general formula (2) which is indicated below, a condensate of either one or both of the two types of organosilicate indicated above, or a partial hydrolyzate of said condensate.

General Formula (1) R¹-Si-(OR²)₃ (1)

(In this formula R¹ is a phenyl group or an alkyl group which has from 1 to 18 carbon atoms, and R² is an alkyl group which has from 1 to 6 carbon atoms.)

General Formula (2) Si-(OR³)₄ (2)

(In this formula R³ is hydrogen or an alkyl group which has from 1 to 6 carbon atoms.)

### [Effect of the Invention]

If a resin composition of this invention is used in a wrinkle pattern paint then a paint film with a wrinkle pattern finish where the wrinkle pattern of the paint film has excellent aging stability and of which the staining resistance is also excellent can be obtained.

### [Embodiment of the Invention]

The present invention is a resin composition which contains (A) specified hydroxyl group containing polyester resin, (B) hexakis-alkoxymethylated melamine resin, (C) de-watering agent, (D) specified blocked sulfonic acid compound which has been blocked with a specified tertiary amine, (E) silicate compound and (F) specified particles and/or fibers, and it can be used as a resin composition for wrinkle pattern paints.

In this invention the hydroxyl group containing polyester resin which forms the (A) component is a resin which functions as the base resin of a resin composition for wrinkle pattern paints and which manifests the basic performance (flexibility, hardness, durability and the like) of the paint film which is formed, and it reacts with the (B) component melamine resin.

The hydroxyl group value of the (A) component hydroxyl group containing polyester resin is from 5 to 200 mgKOH/g, preferably from 10 to 150 mgKOH/g and most desirably from 20 to 100 mgKOH/g. If the hydroxyl group value is less than 5 mgKOH/g then the degree of crosslinking in the hardened paint film is too low and so the solvent resistance performance is poor, and if the hydroxyl group value exceeds 200 mgKOH/g then the crosslink density in the hardened paint film is too high and so the workability is reduced.
The number average molecular weight of the (A) component hydroxyl group containing polyester resin is from 500 to 20,000, preferably from 700 to 15,000 and most desirably from 1,000 to 10,000. If the number average molecular weight is less than 500 then the crosslink density in the hardened paint film is too high and so the workability is reduced, and if the number average molecular weight exceeds 20,000 then the crosslink density in the hardened paint film is too low and so the solvent resistance performance is poor.

The (A) component hydroxyl group containing polyester resin can be obtained using a known method such as the direct esterification method, the ester exchange method or the ring-opening polymerization method for example. In those cases where the resins are synthesized using the direct esterification method by the polycondensation of polybasic carboxylic acids and polyhydric alcohols, examples of the polybasic carboxylic acids include dibasic acids such as phthalic acid, isophthalic acid, terephthalic acid, succinic acid, adipic acid, sebacic acid, maleic acid, fumaric acid, tetrahydrophthalic acid, hexahydrophthalic acid and the like and the anhydrides of these acids, and tri- and poly-basic carboxylic acids such trimellitic acid, pyromellitic acid and the like and the anhydrides of these acids. Furthermore, examples of the polyhydric alcohols include diols such as ethylene glycol, propylene glycol, diethylene glycol, butanediol, neopentyl glycol, 1,4-hexanediol, 1,6-hexanediol, cyclohexanedimethylol and the like, and tri- and poly-hydric alcohols such as glycerine, trimethylolethane, trimethylolpropane, pentaerythritol and the like.

The (A) component hydroxyl group containing polyester resin can also be obtained by means of polycondensation with ester exchange between polyhydric alcohols and the lower alkyl esters of a polybasic carboxylic acids. Moreover, the (A) component hydroxyl group containing polyester resin can also be obtained by means of the ring-opening polymerization of a lactone such as □-propiolactone, 0-valerolactone, □-caprolactone and the like.

In this invention the (B) component hexakis-alkoxymethylated melamine resin fulfils the role of reacting with the hydroxyl groups of the (A) component and forming a crosslinked structure and the role of imparting a wrinkle pattern to the paint film. The (B) component hexakis-alkoxymethylated melamine resin is a methylated melamine resin which has six alkoxyl groups. The methylated melamine resins are compounds which have six methylol groups where formaldehyde has been added to the three amino groups of the melamine ring, and the (B) component hexakis-alkoxymethylated melamine resins are compounds where the aforementioned six methylol groups have been further alkoxylated.
The six terminal alkyl groups of the (B) component (the alkyl groups on the hexakis-alkoxyl groups) may be methyl groups, isopropyl groups, n-butyl groups or the like, but they are most desirably methyl groups.
Examples of commercially available hexakis-methylated melamine resins include Cymel 300, Cymel 303 (trade names, produced by the Nippon Cytech Co.), Nikarack MW-30 (trade name, produced by the Sanwa Chemical Co.) and the like.

In this invention the mass ratio of the (A) component and the (B) component as solid fractions is from 60/40 to 90/10, preferably from 70/30 to 90/10, and most desirably from 75/25 to 85/15. In those cases where the mass ratio of the (A) component and the (B) component as solid fractions is such that the proportion of the (A) component is lower than 60/40, the flexible resin component is inadequate and so satisfactory workability is not obtained, and in those cases where the proportion of the (A) component is higher than 90/10 the paint film crosslinking component is inadequate and the solvent resistance is reduced.

In this invention the de-watering agent which is the (C) component extracts water from the system and maintains the stability of the agent which provides a hydrophilic nature which reacts readily with water. Examples of the de-watering agent include chemical de-watering agents such as trimethyl orthoformate, triethyl orthoformate, trimethyl orthoacetate, triethyl orthoacetate, 2,2-dimethoxypropane, 3-ethyl-2-methyl-2-(3-methylbutyl)-1,3-oxolidine and the like, and molecular sieves as physical de-watering agents. Furthermore, examples of commercially available de-watering agents include OFE, OFM, MOA, 2,2-DMP, EOA (all trade names, produced by the Hitaka Kagaku Co.), ZOLDINE, MS-PLUS (trade names, produced by the American Angus Co.) and the like. One of these or a mixture of two or more types can be used.

In this invention the blocked sulfonic acid compound which has been blocked with a specified proportion of a tertiary amine compound which is the (D) component is a compound where a specified proportion of the sulfonic acid is formed as the salt of a tertiary amine and a specified proportion of the action of the sulfonic acid as a catalyst has been temporarily blocked. That is to say, the sulfonic acid is a reaction catalyst for the (A) component and the (B) component and it shortens the reaction time, creates a large difference between the surface hardening and the hardening of the interior of the paint film and makes a good wrinkle pattern, but by forming a salt with a tertiary amine this catalytic action is temporarily blocked.
The boiling point of the tertiary amine which is used in the blocked sulfonic acid compound which has been blocked with a tertiary amine which is the (D) component is from 50 to 300°C, and preferably from 80 to 150°C. In those cases where the boiling point of the tertiary amine is less than 50°C the volatility is high and the stability of the finish of the wrinkle pattern falls with the passage of painting time, and in those cases where it exceeds 300°C the volatility is low and so it is difficult to form a wrinkle pattern.

Examples of the tertiary amine of the (D) component include triethylamine, tributylamine, triallylamine, N-methyldiallylamine, N-methylmorpholine, N,N,N',N'-tetramethyl-1,2-diaminoethane, N-methylpiperidine, pyridine and 4-ethylpyridine. One of these can be used alone or a mixture of two or more types can be used, but the use of triethylamine is especially desirable.
Examples of the sulfonic acids which can be used in the (D) component include p-toluene sulfonic acid, dodecylbenzene sulfonic acid, dinonylnaphthalene disulfonic acid, methane sulfonic acid and dinonylnaphthalene sulfonic acid, and one of these can be used alone or a mixture of two or more types can be used. p-Toluene sulfonic acid is especially desirable.

One of the main distinguishing features of the present invention is that the mol ratio of the tertiary amine compound with respect to the sulfonic acid for blocking the sulfonic acid with a tertiary amine compound is set to from 0.2 to 0.9, and preferably to from 0.3 to 0.8.
In those cases where the mol ratio of tertiary amine compound with respect to the sulfonic acid is less than 0.2 the amount of tertiary amine is insufficient and a good wrinkle pattern finish cannot be formed, and in those cases where it exceeds 0.9 there is a large amount of tertiary amine and the stability of the agent which provides a hydrophilic nature is reduced.
The mol ratio of the tertiary amine compound with respect to the sulfonic acid and the particle-like or fiber-like aggregate for the (F) component which is used in the invention are closely related to the stability of the wrinkle pattern finish.

In this invention the (F) component contributes to the formation of a good wrinkle pattern finish and the stabilization of the finish, and in practical terms at least one type of material selected from among (a) organic resin particles of average particle diameter not more than 40 µm, (b) inorganic glass particles of average particle diameter not more than 100 µm, and (c) inorganic fibers of average length not more than 300 µm can be used.

The average particle diameter of the organic resin particles (a) is preferably not more than 40 µm, more desirably not more than 35 µm, and most desirably not more than 30 µm. In those cases where the average particle diameter exceeds 40 µm the appearance of the paint film is poor. A lower limiting value of 1 µm or above is generally preferred for the average particle diameter of the organic resin particles. Examples of commercially available organic resin particles include Techpolymer MBX-5, MBX-12, MBX-30 (trade names, produced by the Sekisui Kaseiki Kogyo Co.) and the like.

The average particle diameter of the inorganic glass particles (b) is preferably not more than 100 µm, more desirably not more than 80 µm, and most desirably not more than 50 µm. In those cases where the average particle diameter of the inorganic glass particles exceeds 100 µm the appearance of the paint film is poor. A lower limiting value of 1 µm or above is generally preferred for the average particle diameter of the inorganic glass particles. Examples of commercially available inorganic glass particles include Crystallite AA, W-S, VX-S2 (trade names, produced by the Tatsumori Co.), Greendensic #600, #800, #1200 (trade names, produced by the Showa Denko Co.) and the like.

The average length of the inorganic fibers (c) is preferably not more than 300 µm, but more desirably the average length is not more than 250 µm and most desirably the average length is not more than 200 µm. In those cases where the average length of the inorganic fibers exceeds 300 µm the appearance of the paint film is poor. A lower limiting value of 5 µm or above is generally preferred for the average length of the inorganic fibers. An average diameter from 1 to 40 µm is generally preferred for the inorganic fibers.
Examples of commercially available inorganic fibers include Safestrand REV1, REV4, REV8 (trade names, produced by the Nippon Plate Glass Co.), EGP200, EGP-200-10, EFH-100-31, EFH150-31 (trade names, produced by the Central Glass Co.) and the like.

In this invention a silicate compound is used for the (E) component. The (E) component is for rendering the paint film surface hydrophilic and improving the staining resistance performance.
The organosilicates which can be represented by general formula (1) and general formula (2) which are indicated below, condensates of either one or both of the abovementioned types of organosilicate, or partial hydrolyzates of said condensates are preferably used for the organosilicate compound of the (E) component.

R¹-Si- (OR²)₃ (1)

Si-(OR³)₄ (2)

In general formula (1), R¹ is a phenyl group or an alkyl group which has from 1 to 18 carbon atoms, and the number of carbon atoms of the alkyl group is preferably from 1 to 14 and most desirably from 1 to 9. If organosilicates and/or condensates thereof in which the number of carbon atoms of the organic group represented by R¹ exceeds 18 are used then satisfactory surface orientation when forming a paint film is not obtained and so the paint film surface does not become hydrophilic and good staining resistance performance is not obtained.
Furthermore, R² in general formula (1) or R³ in general formula (2) is an alkyl group which has from 1 to 6 carbon atoms, and preferably an alkyl group which has from 1 to 3 carbon atoms or R³ is hydrogen. If organosilicates and/or condensates thereof in which the number of carbon atoms in the alkyl groups represented by R² or R³ exceeds 6 are used then the hydrolysis rate is very slow.

Actual examples of organosilicates of the abovementioned general formula (1) include trimethoxybutylsilane, trimethoxyethylsilane and the like.
Actual examples of silicates or organosilicates of the abovementioned general formula (2) include tetrahydroxysilane, tetramethoxysilane, tetraethoxysilane, tetrapropoxysilane, tetrabutoxysilane, tetraphenoxysilane, dimethoxydiethoxysilane and the like.
One of these or a combination of two or more types can be used.

Furthermore, the branched or linear condensates obtained by condensing one type, or two or more types, of organosilicate which can be represented by the aforementioned general formula (1) and general formula (2), and preferably the linear condensates where the degree of condensation is from 2 to 100, can be used as condensates of the organosilicates. If the degree of condensation exceeds 100 then there is little effect on the staining resistance and, furthermore, the workability is also reduced and so this is undesirable. The condensates of organosilicates used in the invention most desirably have a degree of condensation of from 2 to 50.
Examples of commercially available organosilicate condensates include MKC Silicate MS51, MS56, MS57, MS58B15 (trade names, produced by the Mitsubishi Kagaku Co.), Ethylsilicate 40, Ethylsilicate 48, EMS-485 (trade names, produced by the Colcoat Co.) and the like.

The preferred proportions in which the (C) to (F) components are included in a resin composition of this invention are, per 100 parts by mass in total as the solid fraction of the (A) component and the (B) component, from 0.1 to 10 parts by mass as solid fraction of the (C) component de-watering agent, from 0.1 to 5 parts by mass as solid fraction of the (D) component blocked sulfonic acid compound, from 0.5 to 10 parts by mass as solid fraction of the (E) component silicate compound and from 1 to 30 parts by mass as solid fraction of the (F) component particle-like or fiber-like aggregate.
Most desirably the (C) component content is from 0.5 to 5 parts by mass, and if there is less than 0.1 part by mass the de-watering action is inadequate and the stability of the agent providing hydrophilicity is inadequate, and finish stability of the wrinkle pattern is not obtained in those cases where it exceeds 10 parts by mass.

Most desirably the (D) component content is from 0.3 to 5 parts by mass, and if it is less than 0.1 part by mass then satisfactory hardening does not occur, and in those cases where it exceeds 5 parts by mass the stability of the agent which provides hydrophilicity is reduced by the excess tertiary amine compound.
Most desirably the (E) component content is from 0.5 to 5 parts by mass, and if it is less than 0.5 part by mass then the surface does not become adequately hydrophilic and so good staining resistance performance is not obtained, and in those cases where it exceeds 10 parts by mass the water resistance performance declines.
Most desirably the (F) component content is from 5 to 25 parts by mass, and if it is less than 1 part by mass then a stable wrinkle pattern finish cannot be formed, and in those cases where it exceeds 30 parts by mass the workability is reduced.

In addition to the abovementioned essential components, inorganic pigments such as titanium dioxide, carbon black, iron oxide, chrome yellow and the like, organic pigments such as cyanine green, cyanine blue and the like, metal powders such as aluminum powder, copper powder and the like, true pigments such as barium sulfate, talc, mica and the like, additives such as pigment dispersing agents, leveling agents, anti-settling agents, antifoaming agents and the like, and one or more solvent may be included in a resin composition of this invention, as required.

The resin compositions of this invention can be produced by mixing the abovementioned components together. In terms of the method of painting it is possible to form a paint film which has a wrinkle pattern by diluting with a solvent such as xylol for example, as required, to achieve the painting viscosity and then carrying out painting and baking for from 20 to 120 seconds at a temperature of from 200 to 300°C. The paint film obtained has good workability and since it is baked for a short time it is suitable as a paint for pre-coated metals, but it is not limited to this application and it can also be used as a paint for post-coating purposes.

In those cases where a resin composition of this invention is used as a clear or a color-clear paint it may be painted directly onto a base material such as steel, galvanized steel sheet, stainless steel, aluminum or the like, or it may be painted on a base material which has been painted with a primer, and furthermore it may be painted onto the usual pre-coated metal steel sheets. A wrinkle pattern paint of this invention can be coated using a bar coater, a flow coater, a roll coater, a roll flow coater, a spray gun or the like. Furthermore, these paints can also be used for embossed steel sheets for improving the design potential.

When, after painting on a resin composition of this invention, the composition is baked at a high temperature of from 200 to 300°C, the blocking tertiary amine compound is released from the paint film close to the surface and evaporates and the sulfonic acid which is released at the same time recovers its catalytic action and the hardening reaction occurs early just in the surface layer and, as a result, a paint film which has a wrinkle pattern is obtained, and the heating and hardening is completed in a short time of from 20 to 120 seconds. The paint film which is produced has crepe-like fine roughness of unspecified direction in two dimensions, and the size and form etc. of the roughness vary with the composition of the wrinkle pattern paint, the film thickness and the baking conditions for example, and by adjusting these factors a paint film which has any wrinkle pattern can be obtained. Furthermore, the paint film obtained has excellent workability, adhesion, corrosion resistance, staining resistance and the like, and even if working is carried out after paint film formation the appearance, workability, adhesion, corrosion resistance, staining resistance and the like of the paint film are unchanged.

### [Illustrative Examples]

The invention is described below in more practical terms by means of illustrative examples. Moreover, the invention is not limited in any way by these illustrative examples.

### (A) Example of the Production of an (A) Component Hydroxyl Group Containing Resin

Isophthalic acid (22.6 parts by mass), 12.5 parts by mass of adipic acid, 19.0 parts by mass of neopentyl glycol and 7.4 parts by mass of trimethylolpropane were introduced into a reaction vessel which had been furnished with a reflux tube which was fitted with a Dean and Stark trap and packed with stainless steel packing material, a thermometer and stirring apparatus and, after first raising the temperature of 150°C, the temperature was raised to 200°C over a period of 2 hours and then to 230°C over a period of 1 hour and, while adding 2.5 parts by mass of xylene, a dehydration type condensation reaction was carried out until the resin acid value reached 10, after which the reaction temperature was lowered to 140°C, 36.0 parts by mass of cyclohexanone were introduced and a polyester resin solution which was transparent in appearance and which contained hydroxyl groups was obtained. The characteristics of the resin solution obtained were residue on heating 60.3 mass% and Gardener viscosity Y at 25°C. Furthermore, the number average molecular weight calculated as polystyrene according to GPC was 3,250 and the hydroxyl group value was 78 mgKOH/g.

### (B) Production of (D) Component Sulfonic Acid Compounds Blocked with Tertiary Amine

A 50 mass% p-toluene sulfonic acid (PTSA) isopropanol solution (72 parts by mass) and 12.7 parts by mass of triethylamine (TEA, boiling point 89.4°C) were mixed in a reaction vessel and then stirred until the whole mixture became uniform and a blocked sulfonic acid compound (TEA/PTSA mol ratio (theoretical value) = 0.6) was obtained.
Blocked sulfonic acid compounds where p-toluene sulfonic acid had been blocked with triethylamine of which the mol ratio as a theoretical value (theoretical value) was from 0.3 to 0.8 were obtained in the same way as described above.

### Examples 1 to 15 and Examples 17 and 18

### Production of White Paints for Pre-coated Metal Purposes

The hydroxyl group containing polyester resin shown in the example of production (60 parts by mass as solid fraction), 40 parts by mass of titanium oxide and 30 parts by mass of mixed solvent (a solvent where Solvesso #100 (produced by the Esso Co., trade name, aromatic petroleum naphtha) and cyclohexanone had been mixed 50/50 as parts by mass) were dispersed using a sand mill until the particle size of the pigment reached 10 µm. Subsequently the other raw materials shown in Table 1 and Table 2 (shown as the solid fraction of each raw material excluding solvent) were added respectively and admixed and white paints were obtained. The paints obtained were adjusted to a Ford cup No.4 (25°C) viscosity of from 120 ± 10 seconds using the mixed solvent described above. Moreover, the amounts of the raw materials compounded shown in Table 1 and Table 2 are in units of parts by mass (indicated as solid fraction).

### Example 16

### Production of Clear Paint for Pre-coated Metal Purposes

The other raw materials shown in Table 2 were added to and mixed with 60 parts by mass as solid fraction of the polyester resin shown in the example of production to form a clear paint. The paint obtained was adjusted to a Ford cup No.4 (25°C) viscosity of from 120 ± 10 seconds using the mixed solvent described above.

### Comparative Examples 1 to 16

Titanium oxide was dispersed in essentially the same way as in the examples and the raw materials shown in Table 4 and Table 5 were added and admixed and white paints were obtained. The paints obtained were adjusted to a Ford cup No.4 (25°C) viscosity of from 120 ± 10 seconds using the mixed solvent described above. Moreover, the amounts of the raw materials compounded shown in Table 4 and Table 5 are in units of parts by mass (indicated as solid fraction).

The raw material components in Tables 1, 2, 4 and 5 are indicated below.
1) Cymel 303: Hexakis-methoxymethylated melamine (product name, produced by the Nippon Cytech Industries Co., solid fraction 100 mass%)
2) OFE: Orthofomic acid ethyl ester (product name, produced by the Hitaka Kagaku Co., solid fraction 98 mass%)
3) MKC Silicate MS56: Silicate compound (methyl silicate) (product name, produced by the Mitsubishi Kagaku Co.).
4) MKC Silicate MS58B15: Silicate compound (15% butyl group modified methyl silicate) (product name, produced by the Mitsubishi Kagaku Co.).
5) MBX-30: Organic resin particles, average particle diameter 30 µm (crosslinked poly(methyl methacrylate)) (product name, produced by the Sekisui Kaseiki Kogyo Co.)
6) MBX-50: Organic resin particles, average particle diameter 50 µm (crosslinked poly(methyl methacrylate)) (product name, produced by the Sekisui Kaseiki Kogyo Co.)
7) Blasting Beads J-320: Inorganic glass particles, average particle diameter 50 µm (product name, produced by the Toshiba Barotini Co.)
8) Blasting Beads J-46: Inorganic glass particles, average particle diameter 360 µm (product name, produced by the Toshiba Barotini Co.)
9) Surfacestrand REV-4: Inorganic fibers, average diameter 13 µm, average length 70 µm (product name, produced by the Japan Plate Glass Co.)
10) ECS03-350: Inorganic fibers average length 3 mm (product name, produced by the Central Glass Co.)

### Production of Test Pieces

An epoxy resin based primer (Precolor HP-32, trade name, produced by the BASF Coatings Japan Co.) was coated with a roll coater in such a way as to provide a dry paint film thickness of 5 µm onto a galvanized steel sheet of sheet thickness 0.27 mm which had been subjected to a painting-type chromate treatment and baked for 40 seconds under conditions such that the PMT (painted sheet maximum temperature) was 200°C. Then the paints of Examples 1 to 18 and Comparative Examples 1 to 16 were painted on as top-coat paints using a roll coater in such a way as to provide a dry paint film thickness of 15 µm and baked for 50 seconds under conditions such that that the PMT was 230°C. The results obtained on evaluation are shown in Tables 3 and 6.

Furthermore, the property evaluation of the paint films obtained with the paint compositions of this invention was carried out using the methods outlined below.

### (1) Workability

The test piece was cut to a width of 5 cm and, at a room temperature of 20°C, flexed through 180° with nothing on the inside as 0T, with one sheet the same as the test piece on the inside as 1T or with two sheets the same as the test piece on the inside as 2T with the paint film on the outside. Furthermore, flexing was carried out through 180° with four sheets the same as the test piece on the inside as 4T with the paint film on the outside. Evaluation was carried out by means of subsequent peeling with cellophane tape.
○: No peeling at all.
□: Peeling was seen over an area of less than 10%.
X: 10% or more peeling was seen.

### (2) Hydrophilicity

The test piece was immersed in water for 1 hour and then the water was removed from the surface and the test piece was dried for 1 hour and then the contact angle was measured using a FACE automatic contact angle measuring device (model CA-Z) produced by the Kyowa Kaimen Kagaku Co. and this was taken as an index of the hydrophilicity.
○: Angle of contact of water less than 60°, good hydrophilicity
X: Angle of contact of water 60° or above, poor hydrophilicity

### (3) Finish Stability of the Wrinkle Pattern

The finish stability of the wrinkle pattern was evaluated visually in the following way.
○: The wrinkle pattern had a rough feel, the pattern was uniform and even after six hours had passed after adding the agent for providing a hydrophilic nature there was no change in these properties and good design potential was maintained.
X: No rough feel of a wrinkle pattern immediately after adding the agent providing a hydrophilic nature or after 6 hours had passed after adding the agent providing a hydrophilic nature, or the pattern was irregular and the design potential was poor.

### (4) Solvent Resistance

The painted surface of a painted steel sheet was wiped 100 times with a gauze which contained xylene while applying a load of 1 kg and the paint surface was observed. The evaluation criteria were as follows.
○: No change in the paint surface, solvent resistance good
X: Surface of the paint film dissolved in the xylene, solvent resistance poor

### (5) Water Resistance

The test piece was immersed in warm water at 40°C for 240 hours and then the water was removed from the surface and the color difference (the DL value) before and after the test was measured.
○: □L value less than 1, water resistance good
X: □L value 1 or more, water resistance poor

### (6) Staining Resistance

A carbon black (10 mass%)/water dispersed paste was applied to the surface of the test piece and left to stand for 2 hours at a constant temperature of 50°C in accordance with the staining resistance test of JIS K-5400 (2000) 8.10.
Subsequently the test piece was rinsed with running water and the state of the paint film surface was observed visually and the staining resistance performance was evaluated on the basis of the following criteria.
○: No carbon black/water dispersed paste mark remained on the test piece
X: Pronounced mark of the carbon black/water dispersed paste on the test piece

**Table 1**

| | | Example | 1 | 2 | 3 | 4 | 5 | 6 | 7 | 8 |
|---|---|---|---|---|---|---|---|---|---|---|
| Titanium oxide | | | 50 | 50 | 50 | 50 | 50 | 50 | 50 | 50 |
| Polyester resin | | | 80 | 80 | 80 | 80 | 80 | 80 | 80 | 80 |
| Melamine resin | 1) | | 20 | 20 | 20 | 20 | 20 | 20 | 20 | 20 |
| De-watering agent | 2) | | 5 | 5 | 5 | 5 | 5 | 5 | 5 | 5 |
| Blocked sulfonic acid compound (tertiary | | | 1.5 | 1.5 | 1.5 | 1.5 | 1.5 | 1.5 | 0.3 | 4 |
| amine/sulfonic acid mol ratio) | | | (0.6) | (0.6) | (0.6) | (0.6) | (0.6) | (0.6) | (0.6) | (0.6) |
| Silicate compound | 3) | | 5 | 5 | 5 | 5 | 5 | 5 | 5 | 5 |
| Silicate compound | 4) | | | | | | | | | |
| Organic resin particles A | 5) | | 20 | | | 10 | | 10 | 10 | 10 |
| Organic resin particles B | 6) | | | | | | | | | |
| Inorganic glass particles A | 7) | | | 20 | | 10 | 10 | | | |
| Inorganic glass particles B | 8) | | | | | | | | | |
| Inorganic fibers A | 9) | | | | 20 | | 10 | 10 | 10 | 10 |
| Inorganic fibers B | 10) | | | | | | | | | |

**Table 2**

| Example | | | 9 | 10 | 11 | 12 | 13 | 14 | 15 | 16 | 17 | 18 |
|---|---|---|---|---|---|---|---|---|---|---|---|---|
| Titanium oxide | | | 50 | 50 | 50 | 50 | 50 | 50 | 50 | 0 | 50 | 50 |
| Polyester resin | | | 80 | 80 | 80 | 70 | 70 | 65 | 65 | 80 | 80 | 80 |
| Melamine resin | 1) | | 20 | 20 | 20 | 30 | 30 | 35 | 35 | 20 | 20 | 20 |
| De-watering agent | 2) | | 5 | 5 | 5 | 5 | 5 | 0.2 | 8 | 5 | 5 | 5 |
| Blocked sulfonic acid compound | | | 1.5 | 1.5 | 1.5 | 1.5 | 1.5 | 1.5 | 1.5 | 1.5 | 1.5 | 1.5 |
| (tertiary amine/sulfonic acid mol | | | (0.6) | (0.3) | (0.8) | (0.6) | (0.6) | (0.6) | (0.6) | (0.6) | (0.6) | (0.6) |
| ratio) | | | | | | | | | | | | |
| Silicate compound | 3) | | | 5 | 5 | 0.7 | 9 | 5 | 5 | 5 | 5 | 5 |
| Silicate compound | 4) | | 5 | | | | | | | | | |
| Organic resin particles A 5) | | | 10 | | 10 | 10 | 10 | 10 | 10 | 10 | 1 | 14 |
| Organic resin particles B | 6) | | | | | | | | | | | |
| Inorganic glass particles A | 7) | | | | | | | | | | | |
| Inorganic glass particles B | 8) | | | | | | | | | | | |
| Inorganic fibers A | 9) | | 10 | 10 | 10 | 10 | 10 | 10 | 10 | 10 | 1 | 14 |
| Inorganic fibers B | 10) | | | | | | | | | | | |

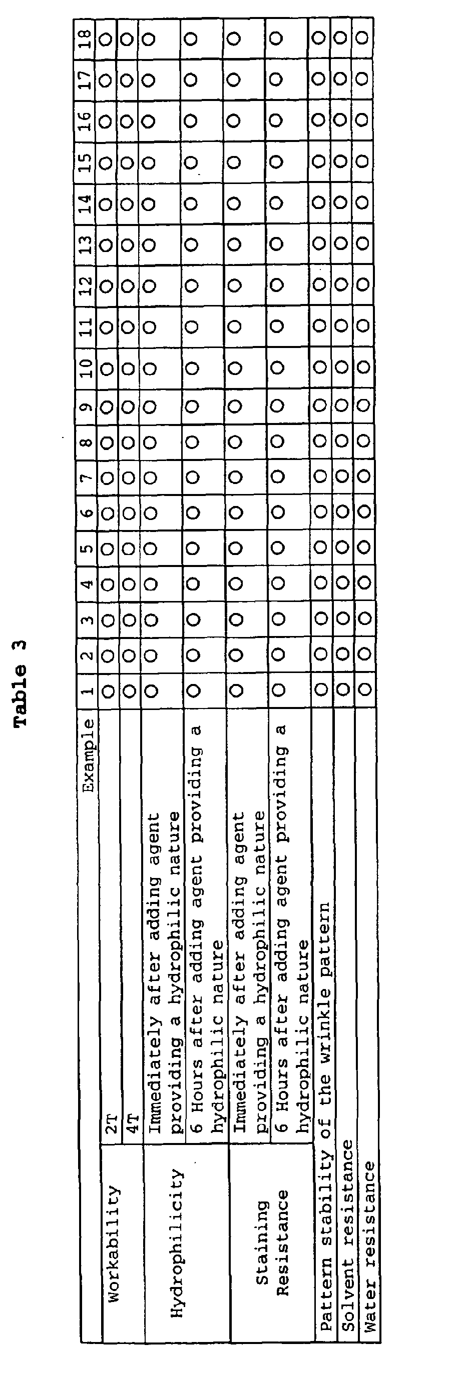

**Table 4**

| Comparative Example | | | 1 | 2 | 3 | 4 | 5 | 6 | 7 | 8 |
|---|---|---|---|---|---|---|---|---|---|---|
| Titanium oxide | | | 50 | 50 | 50 | 50 | 50 | 50 | 50 | 50 |
| Polyester resin | | | 80 | 80 | 80 | 80 | 80 | 80 | 80 | 80 |
| Melamine resin | 1) | | 20 | 20 | 20 | 20 | 20 | 20 | 20 | 20 |
| De-watering agent | 2) | | 5 | 5 | 0 | 15 | 5 | 5 | 5 | 5 |
| Blocked sulfonic acid compound (tertiary | | | 1.5 | 1.5 | 1.5 | 1.5 | 0.05 | 10 | 1.5 | 1.5 |
| amine/sulfonic acid mol ratio) | | | (0.1) | (1.3) | (0.6) | (0.6) | (0.6) | (0.6) | (0.6) | (0.6) |
| Silicate compound | 3) | | 5 | 5 | 5 | 5 | 5 | 5 | 0.1 | 5 |
| Silicate compound | 4) | | | | | | | | | |
| Organic resin particles A | 5) | | 10 | 10 | 10 | 10 | 10 | 10 | 10 | 10 |
| Organic resin particles B | 6) | | | | | | | | | |
| Inorganic glass particles A | 7) | | | | | | | | | |
| Inorganic glass particles B | 8) | | | | | | | | | |
| Inorganic fibers A | 9) | | 10 | 10 | 10 | 10 | 10 | 10 | 10 | 10 |
| Inorganic fibers B | 10) | | | | | | | | | |

**Table 5**

| Comparative Example | | | 9 | 10 | 11 | 12 | 13 | 14 | 15 | 16 |
|---|---|---|---|---|---|---|---|---|---|---|
| Titanium oxide | | | 50 | 50 | 50 | 50 | 50 | 50 | 50 | 50 |
| Polyester resin | | | 80 | 80 | 80 | 80 | 80 | 80 | 80 | 55 |
| Melamine resin | 1) | | 20 | 20 | 20 | 20 | 20 | 20 | 20 | 45 |
| De-watering agent | 2) | | 5 | 5 | 5 | 5 | 5 | 5 | 5 | 5 |
| Blocked sulfonic acid compound (tertiary | | | 1.5 | 1.5 | 1.5 | 1.5 | 1.5 | 1.5 | 1.5 | 1.5 |
| amine/sulfonic acid mol ratio) | | | (0.6) | (0.6) | (0.6) | (0.6) | (0.6) | (0.6) | (0.6) | (0.6) |
| Silicate compound | 3) | | 5 | 5 | 5 | 5 | 5 | 5 | 5 | 5 |
| Silicate compound | 4) | | | | | | | | | |
| Organic resin particles A | 5) | | | 20 | | 20 | | | | 20 |
| Organic resin particles B | 6) | | | | | | 25 | | | |
| Inorganic glass particles A | 7) | | | | 20 | 20 | | | | |
| Inorganic glass particles B | 8) | | | | | | | 25 | | |
| Inorganic fibers A | 9) | | | 20 | 20 | | | | | |
| Inorganic fibers B | 10) | | | | | | | | 25 | |

**Table 6**

| Comparative Example | | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|---|
| Workability | 2T | ○ | ○ | ○ | ○ | ○ | ○ | ○ | ○ | ○ | X | X | X | ○ | ○ | ○ | X |
| | 4T | ○ | ○ | ○ | ○ | ○ | X | ○ | ○ | ○ | ○ | ○ | ○ | ○ | ○ | ○ | X |
| Hydrophilicity | Immediately after adding agent | ○ | ○ | ○ | ○ | ○ | ○ | X | ○ | ○ | ○ | ○ | ○ | ○ | ○ | ○ | ○ |
| | providing a hydrophilic nature | | | | | | | | | | | | | | | | |
| | 6 Hours after adding agent | ○ | X | X | ○ | ○ | X | X | ○ | ○ | ○ | ○ | ○ | ○ | ○ | ○ | ○ |
| | providing a hydrophilic nature | | | | | | | | | | | | | | | | |
| Staining Resistance | Immediately after adding agent | ○ | ○ | ○ | ○ | ○ | ○ | X | ○ | ○ | ○ | ○ | ○ | ○ | ○ | ○ | ○ |
| | providing a hydrophilic nature | | | | | | | | | | | | | | | | |
| | 6 Hours after adding agent | ○ | X | X | ○ | ○ | X | X | ○ | ○ | ○ | ○ | ○ | ○ | ○ | ○ | ○ |
| | providing a hydrophilic nature | | | | | | | | | | | | | | | | |
| Pattern stability of the wrinkle pattern | | X | ○ | ○ | X | X | ○ | ○ | ○ | X | ○ | ○ | ○ | X | X | X | X |
| Solvent resistance | | ○ | ○ | ○ | ○ | X | ○ | ○ | ○ | ○ | ○ | ○ | ○ | ○ | ○ | ○ | ○ |
| Water resistance | | ○ | ○ | ○ | ○ | ○ | ○ | ○ | X | ○ | ○ | ○ | ○ | ○ | ○ | ○ | ○ |

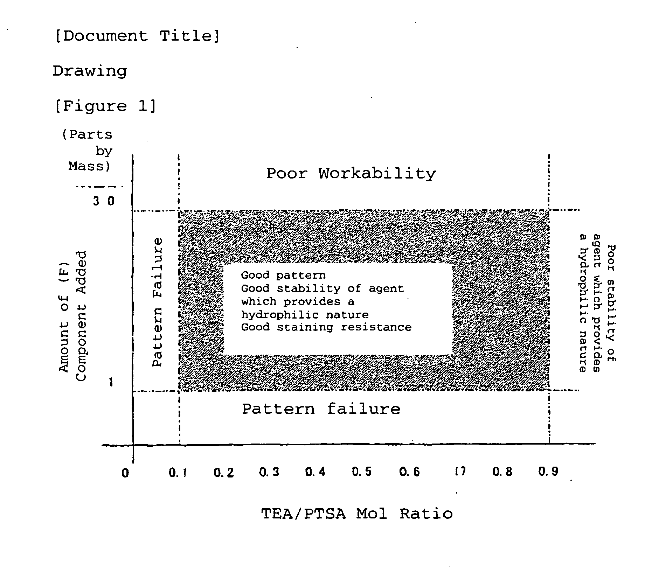

The proper ranges for the (D) component and the (F) component in this invention are shown in Figure 1. In Figure 1 the mol ratio of triethylamine (TEA) with respect to the p-toluene sulfonic acid (PTSA) in the (D) component blocked sulfonic acid compound is shown on the abscissa and the amount of (F) component particles or fibers added is shown on the ordinate.
As shown in Figure 1, while the TEA/PTSA mol ratio is within the range from 0.1 to 0.9 and the amount of the (F) component added is within the range of from 1 to 30 parts by mass per 100 parts by mass as the total solid fraction of the (A) component and the (B) component, the finish stability of the wrinkle pattern is good and the stability of the agent which provides a hydrophilic nature is also good, and the staining resistance is also good.

### [Brief Explanation of the Drawing]

Figure 1 is a drawing which shows the relationship of the effect of the invention with the mol ratio of triethylamine (TEA) with respect to the p-toluene sulfonic acid (PTSA) in the (D) component blocked sulfonic acid compound and the amount of the (F) component particles or fibers added.

## Claims

1. A resin composition which contains (A) hydroxyl group containing polyester resin of which the hydroxyl group value is from 5 to 200 mgKOH/g and the number average molecular weight is from 500 to 20,000, (B) hexakis-alkoxymethylated melamine resin, (C) de-watering agent, (D) blocked sulfonic acid compound which has been blocked with a tertiary amine compound of boiling point from 50 to 300°C where the mol ratio with respect to the sulfonic acid is from 0.2 to 0.9, (E) silicate compound and (F) at least one material selected from among (a) organic resin particles of average particle diameter not more than 40 µm, (b) inorganic glass particles of average particle diameter not more than 100 µm and (c) inorganic fibers of average length not more than 300 µm, **characterized in that** the mass ratio of the (A) component and the (B) component as the solid fractions is from 60/40 to 90/10 and, per 100 parts by mass of the total solid fraction of the (A) component and the (B) component, the amount of the (C) component included as solid fraction is from 0.1 to 10 parts by mass, the amount of the (D) component included as solid fraction is from 0.1 to 5 parts by mass, the amount of the (E) component included as solid fraction is from 0.5 to 10 parts by mass and the amount of the (F) component included as solid fraction is from 1 to 30 parts by mass.

2. A resin composition as claimed in claim 1 in which the (E) component silicate compound is an organosilicate which can be represented by the general formula (1) which is indicated below, an organosilicate which can be represented by general formula (2) which is indicated below, a condensate of either one or both of the two types of organosilicate indicated above, or a partial hydrolyzate of said condensate.
General Formula (1) R¹-Si-(OR²)₃ (1)
(In this formula R¹ is a phenyl group or an alkyl group which has from 1 to 18 carbon atoms, and R² is an alkyl group which has from 1 to 6 carbon atoms.)
General Formula (2) Si-(OR³)₄ (2)
(In this formula R³ is hydrogen or an alkyl group which has from 1 to 6 carbon atoms.)

## Patentansprüche

1. Harzzusammensetzung, die (A) hydroxylgruppenhaltiges Polyesterharz mit einer Hydroxylzahl von 5 bis 200 mg KOH/g und einem zahlenmittleren Molekulargewicht von 500 bis 20.000, (B) hexakisalkoxymethyliertes Melaminharz, (C) Entwässerungsmittel, (D) blockierte Sulfonsäureverbindung, die mit einer tertiären Aminverbindung mit einem Siedepunkt von 50 bis 300°C blockiert worden ist, wobei das Molverhältnis in bezug auf die Sulfonsäure 0,2 bis 0,9 beträgt, (E) Silicatverbindung und (F) mindestens ein Material, das unter (a) Teilchen aus organischem Harz mit einem mittleren Teilchendurchmesser von höchstens 40 µm, (b) Teilchen aus anorganischem Glas mit einem mittleren Teilchendurchmesser von höchstens 100 µm und (c) anorganischen Fasern mit einer mittleren Länge von höchstens 300 µm ausgewählt ist, enthält, **dadurch gekennzeichnet, daß** das Massenverhältnis von Komponente (A) und Komponente (B) als Feststofffraktionen 60/40 bis 90/10 beträgt und, bezogen auf 100 Massenteile der gesamten Feststofffraktion von Komponente (A) und Komponente (B), die als Feststofffraktion enthaltene Menge der Komponente (C) 0,1 bis 10 Massenteile beträgt, die als Feststofffraktion enthaltene Menge der Komponente (D) 0,1 bis 5 Massenteile beträgt, die als Feststofffraktion enthaltene Menge der Komponente (E) 0,5 bis 10 Massenteile beträgt und die als Feststofffraktion enthaltene Menge der Komponente (F) 1 bis 30 Massenteile beträgt.

2. Harzzusammensetzung nach Anspruch 1, in der es sich bei der Silikatverbindungskomponente (E) um ein Organosilikat, das durch die nachstehend angegebene allgemeine Formel (1) wiedergegeben werden kann, ein Organosilikat, das durch die nachstehend angegebene allgemeine Formel (2) wiedergegeben werden kann, ein Kondensat von einem oder beiden der zwei oben angegebenen Organosilicattypen oder ein Partialhydrolysat des Kondensats handelt.
Allgemeine Formel (1) R¹-Si-(OR²)₃ (1)
(In dieser Formel steht R¹ für eine Phenylgruppe oder eine Alkylgruppe mit 1 bis 18 Kohlenstoffatomen und R² für eine Alkylgruppe mit 1 bis 6 Kohlenstoffatomen.)
Allgemeine Formel (2) Si-(OR³)₄ (2)
(In dieser Formel steht R³ für Wasserstoff oder eine Alkylgruppe mit 1 bis 6 Kohlenstoffatomen.)

## Revendications

1. Composition de résine qui contient (A) une résine de polyester contenant un groupe hydroxyle dont l'indice de groupe hydroxyle est de 5 à 200 mgKOH/g et le poids moléculaire moyen en nombre est de 500 à 20 000, (B) une résine de mélamine hexakis-alcoxyméthylée, (C) un agent déshydratant, (D) un composé d'acide sulfonique bloqué qui a été bloqué avec un composé d'amine tertiaire ayant un point d'ébullition de 50 à 300 °C où le rapport molaire par rapport à l'acide sulfonique est de 0,2 à 0,9, (E) un composé de silicate et (F) au moins un matériau choisi parmi (a) des particules de résine organique de diamètre de particule moyen de pas plus de 40 µm, (b) des particules de verre inorganique de diamètre de particule moyen de pas plus de 100 µm et (c) des fibres inorganiques de longueur moyenne de pas plus de 300 µm, **caractérisées en ce que** le rapport en masse du composant (A) et du composant (B) en tant que fractions solides est de 60/40 à 90/10 et, pour 100 parties en masse de la fraction solide totale du composant (A) et du composant (B), la quantité du composant (C) inclus sous forme de fraction solide est de 0,1 à 10 parties en masse, la quantité du composant (D) inclus sous forme de fraction solide est de 0,1 à 5 parties en masse, la quantité du composant (E) inclus sous forme de fraction solide est de 0,5 à 10 parties en masse et la quantité du composant (F) inclus sous forme de fraction solide est de 1 à 30 parties en masse.

2. Composition de résine selon la revendication 1 dans laquelle le composant (E) de composé de silicate est un organosilicate qui peut être représenté par la formule générale (1) qui est indiquée ci-dessous, un organosilicate qui peut être représenté par la formule générale (2) qui est indiquée ci-dessous, un condensat d'un ou des deux types d'organosilicate indiqués ci-dessus, ou un hydrolysat partiel dudit condensat.
Formule générale (1) R¹-Si-(OR²)₃ (1)
(Dans cette formule R¹ est un groupe phényle ou un groupe alkyle qui a de 1 à 18 atomes de carbone, et R² est un groupe alkyle qui a de 1 à 6 atomes de carbone.)
Formule générale (2) Si-(OR³)₄ (2)
(Dans cette formule R³ est un hydrogène ou un groupe alkyle qui a de 1 à 6 atomes de carbone.)
